# EUROPÄISCHE PATENTSCHRIFT

(11) **EP 2 719 064 B1**
(45) Veröffentlichungstag und Bekanntmachung des Hinweises auf die Patenterteilung: **28.11.2018**
(21) Anmeldenummer: 12743349.8
(22) Anmeldetag: 06.06.2012
(51) Int. Cl.: H02M 3/28, H02M 3/335

(54) **VERFAHREN ZUM SCHALTEN EINER GETAKTETEN SPERRWANDLERSCHALTUNG**
METHOD FOR TOGGLING A CLOCKED FLYBACK CONVERTER CIRCUIT
PROCÉDÉ DE CONNEXION D'UN CIRCUIT CONVERTISSEUR À TRANSFERT INDIRECT CADENCÉ

(30) Priorität: 06.06.2011 DE 102011103409
(43) Veröffentlichungstag der Anmeldung: 16.04.2014
(73) Patentinhaber: Tridonic GmbH & Co. KG, 6851 Dornbirn (AT)
(72) Erfinder: MOOSMANN, Florian, A-6850 Dornbirn (AT); TROPPACHER, Rainer, A-6850 Dornbirn (AT); SANDHOLZER, Markus, A-6844 Altach (AT)
(74) Vertreter: Banzer, Hans-Jörg
(86) Internationale Anmeldenummer: PCT/AT2012/000157
(87) Internationale Veröffentlichungsnummer: WO 2012/167293

(56) Entgegenhaltungen:
- JP-A- 5 146 149
- JP-A- 6 201 738
- JP-A- 10 341 570

## Beschreibung

Die vorliegende Erfindung betrifft Verfahren zum Schalten einer getakteten Sperrwandlerschaltung, insbesondere ein Verfahren zum Heizen einer Wendel eines Leuchtmittels, insbesondere einer Gasentladungslampe, sowie eine entsprechend ausgestaltete getaktete Sperrwandlerschaltung, insbesondere Heizschaltung.

Einige Leuchtmittel, wie insbesondere Gasentladungslampen wie beispielsweise Leuchtstofflampen, erfordern Heizschaltungen, um die Wendeln des Leuchtmittels zu heizen. In diesem Zusammenhang sind beispielsweise transformatorisch arbeitende Heizschaltungen bekannt, welche mit Hilfe eines Transformators oder Übertragers zum Vorheizen oder Zuheizen der Wendeln Heizenergie in einen mit der jeweils zu beheizenden Wendel verbundenen Ausgangskreis der Heizschaltung übertragen. Einige dieser transformatorisch arbeitenden Heizschaltungen verwenden einen mit einem steuerbaren Schalter getakteten Sperrwandler, welcher auch als "Flyback"-Konverter bezeichnet wird.

Sperrwandler dienen zur galvanisch entkoppelten Übertragung von elektrischer Energie von einer Eingangsseite zu einer Ausgangsseite und ermöglichen, eine Eingansspannung effizient mit einem geringen schaltungstechnischen Aufwand in ein definiertes Ausgangsspannungsniveau umzusetzen, so dass sie abgesehen von Heizschaltungen auch in verschiedensten anderen Anwendungen zur Strom- oder Spannungsversorgung, wie beispielsweise in getakteten Schaltnetzteilen, eingesetzt werden.

Bei getakteten Sperrwandlern werden steuerbare Schalter, welche vorzugsweise in Form von Leistungsschaltern ausgestaltet sind, verwendet, um abhängig von dem Schalterzustand auf der Eingangsseite des Sperrwandlers elektrische Energie zu speichern und diese auf die Ausgangsseite der Sperrwandlers zu übertragen. Eine galvanisch entkoppelte Energieübertragung kann durch Verwendung eines Transformators oder Übertragers erzielt werden, wobei mit jedem Schaltzyklus in einer Primärwicklung des Transformators Energie gespeichert und auf die Sekundärseite des Transformators übertragen wird. Bei primärgetakteten Schaltnetzteilen mit dieser Sperrwandler-Topologie ist mindestens ein Schalter auf der Primärseite des Transformators vorhanden bzw. mit der Primärwicklung gekoppelt.

Werden Sperrwandler der zuvor beschriebenen Art in Heizschaltungen zum Vorheizen oder Zuheizen der Wendeln von Leuchtmitteln, wie sie beispielsweise in elektronischen Vorschaltgeräten für Gasentladungslampen oder Leuchtstofflampen bzw. in sonstigen Betriebsgeräten für derartige Leuchtmittel vorgesehen sein können, verwendet, kann die Eingangsspannung des Sperrwandlers beispielsweise aus einer Busspannung oder Zwischenkreisspannung des entsprechenden elektronischen Vorschaltgeräts abgeleitet sein, wobei die Eingangsspannung mit Hilfe des Sperrwandlers in eine zum Heizen einer Wendel oder mehrerer Wendeln des jeweiligen Leuchtmittels geeignete Heizspannung umgesetzt wird.

Bei Verwendung von getakteten Sperrwandlern in derartigen Heizschaltungen ist jedoch zu beachten, dass die immer strengeren Vorgaben der Lampenhersteller ein möglichst exaktes und verlustfreies Schalten des Schalters des jeweils eingesetzten Sperrwandlers erfordern.

Zudem können beim Schalten des Schalters Überspannungen oder Überschwinger am Schalter auftreten, welche die Bauteile der Heizschaltung sowie des gesamten elektronischen Vorschaltgeräts oder Betriebsgeräts gefährden können. Derartige Überspannungen können insbesondere auftreten, wenn der Sperrwandler die elektrische Energie nicht von der Primärseite zu der Sekundärseite übertragen kann und der Schalter des Sperrwandlers ausgeschaltet, d.h. geöffnet ist, da in diesem Fall an dem in der Regel als MOS-Feldeffekttransistor ausgestalteten Schalter eine hohe Drain-Source-Spannung anliegt und die Body-Diode des MOS-Feldeffekttransistors leitend wird. Am gefährlichsten sind dabei Betriebsfälle, wenn an die Heizschaltung keine Last oder - bei einer zum Beheizen mehrerer Leuchtmittel ausgestalteten Heizschaltung - lediglich ein Leuchtmittel angeschlossen ist, da die dabei auftretende Überspannung auf den Eingangsbereich hochtransformiert wird, so dass es zum Auftreten eines so genannten "Avalanche"-Effekts kommen kann, welcher zu Beschädigung oder Zerstörung des als MOS-Feldeffekttransistor ausgebildeten Schalters des Sperrwandlers führen kann.

Um diesem Problem zu begegnen, kann der MOS-Feldeffekttransistor entsprechend widerstandsfähig ausgelegt werden, was jedoch den Einsatz von teueren Bauteilen erfordert. Alternativ kann an der Sekundärseite des Sperrwandlers eine Schaltung vorgesehen werden, welche als Grundlast wirkt und somit das Auftreten einer derartigen Überspannung vermeidet, wodurch jedoch der schaltungstechnische Aufwand und die damit verbundenen Kosten entsprechend erhöht werden.
Der vorliegenden Erfindung liegt daher die Aufgabe zugrunde, ein Verfahren zum Heizen mindestens einer Wendel eines Leuchtmittels sowie eine entsprechende Heizschaltung bereitzustellen, wobei die zuvor beschriebenen Überspannungsprobleme vermieden werden können.

Diese Aufgabe wird erfindungsgemäß durch das Verfahren nach Anspruch 1 und einen Sperrwandler nach Anspruch 5 gelöst. Die abhängigen Ansprüche definieren vorteilhafte und bevorzugte Ausführungsformen der Erfindung. Die JP5146149 offenbart ein Verfahren bzw. einen Sperrwandler mit den Merkmalen der Oberbegriffe der Ansprüche 1 und 5.

Erfindungsgemäß wird zum Heizen mindestens einer Wendel eines Leuchtmittels, insbesondere einer Gasentladungslampe wie einer Leuchtstofflampe, eine getaktete Sperrwandlerschaltung eingesetzt, welche einen Transformator mit einer Primärwicklung und einer Sekundärwicklung umfasst. Im Normälbetrieb überträgt die getaktete Sperrwandlerschaltung elektrische Energie von einer mit der Primärwicklung verbundenen und mit einem Schalter durch wiederholtes Einschalten und Ausschalten des Schalters getakteten Primärseite zu einer mit der Sekundärwicklung verbundenen Sekundärseite, um die mindestens eine mit der Sekundärseite gekoppelte Wendel des Leuchtmittels zu heizen. Das gezielte Einschalten und Ausschalten des steuerbaren Schalters, welcher insbesondere in Form eines MOS-Feldeffekttransistors ausgestaltet sein kann, erfolgt mit Hilfe einer Steuereinheit, wobei die Steuereinheit vorzugsweise durch Einstellung der Einschaltzeit des Schalters und der Frequenz, mit welcher dieser abwechselnd eingeschaltet und ausgeschaltet wird, dafür sorgt, dass auf der Ausgangsseite der Sperrwandlerschaltung eine zum Heizen der jeweiligen Wendel geeignete Spannung bereitgestellt wird.

Die nach einem Ausschalten des Schalters über dem Schalter auftretende Spannung wird mit Hilfe einer Erfassungseinrichtung erfasst und mit Hilfe einer Auswertungseinrichtung mit einem Referenzwert verglichen. Übersteigt die erfasste Spannung an dem Schalter nach einem Ausschaltvorgang den Referenzwert, wird von dem Normalbetrieb in einen Fehlerbetrieb gewechselt, um eine Maßnahme zu ergreifen, welche diesem Überspannungszustand entgegen wirkt.

Gemäß einem Ausführungsbeispiel der Erfindung wird in dem Fehlerbetrieb ein erneutes Einschalten des Schalters zumindest vorübergehend unterbunden, oder es wird gegenüber dem Normalbetrieb die Einschaltzeit des Schalters reduziert. Ebenso kann gemäß einem weiteren Ausführungsbeispiel vorgesehen sein, dass im Fehlerbetrieb die an der Primärseite der getakteten Sperrwandlerschaltung anliegende Versorgungsspannung reduziert wird. Bei Einsatz der Heizschaltung in einem elektronischen Vorschaltgerät kann die Versorgungsspannung aus einer Busspannung oder Zwischenkreisspannung des elektronischen Vorschaltgeräts, welche insbesondere von einer Leistungsfaktorkorrekturschaltung des Vorschaltgeräts zur Verfügung gestellt werden kann, abgeleitet sein, so dass in diesem Fall das elektronische Vorschaltgerät bzw. diejenigen Komponenten, welche die Eingangsspannung für die Heizschaltung erzeugen, entsprechend angesteuert werden, um die Eingangsspannung zu reduzieren.

Durch die Erfassung einer Überspannung nach dem Ausschalten des Schalters der getakteten Sperrwandlerschaltung der erfindungsgemäßen Heizschaltung kann das Auftreten des zuvor beschriebenen "Avalanche"-Effekts erkannt und rechtzeitig eingegriffen werden, um eine Beschädigung der Bauteile der Heizschaltung, insbesondere des als Feldeffekttransistors ausgebildeten Schalters, zu vermeiden. Zudem können als Schalter weniger spannungsfeste und demzufolge billigere Transistoren verwendet werden.

Zur indirekten Erfassung der an dem Schalter auftretenden Spannung kann ein mit dem Schalter gekoppelter und damit insbesondere in Serie geschalteter Widerstand verwendet werden, um somit den durch den Schalter und den Widerstand fließenden Strom zu erfassen, welcher repräsentativ für die Spannung an dem Schalter ist. Dieser Ansatz besitzt den Vorteil, dass ein derartiger Widerstand ohnehin in der Heizschaltung zu anderen Zwecken, beispielsweise zur Wendelerkennung oder Überstromerkennung, vorgesehen sein kann, so dass die Erfindung kostengünstig mit geringem Aufwand realisiert werden kann. Gemäß einer alternativen Ausführungsform kann die Spannung auch direkt mit einem mit dem Schalter gekoppelten Spannungsteiler erfasst werden, wobei der Spannungsteiler insbesondere parallel zu dem Schalter angeordnet sein kann.

Die vorliegende Erfindung ist insbesondere zum Vorheizen und Zuheizen von Wendeln einer Gasentladungslampe oder einer Leuchtstofflampe geeignet und kann vorzugsweise in einem entsprechenden elektronischen Vorschaltgerät oder einem sonstigen Betriebsgerät für das jeweilige Leuchtmittel eingesetzt werden. Die Erfindung ist jedoch nicht auf diesen bevorzugten Anwendungsfall beschränkt. Grundsätzlich ist ein Einsatz der Erfindung nicht nur in Heizschaltungen, sondern auch in anderen Anwendungen von getakteten Sperrwandlerschaltungen möglich. Beispielsweise kann eine derartige getakteten Sperrwandlerschaltung als zum direkten oder indirekten Speisen einer Leuchtdiode genutzt werden.

Die Erfindung wird nachfolgend näher unter Bezugnahme auf die beigefügte Zeichnung anhand bevorzugter Ausführungsbeispiele erläutert.
Fig. 1 zeigt eine schematische Darstellung einer getakteten Sperrwandlerschaltung gemäß einer ersten Ausführungsform der Erfindung,
Fig. 2 zeigt eine schematische Darstellung einer getakteten Sperrwandlerschaltung gemäß einer zweiten Ausführungsform der Erfindung,
Fig. 3 zeigt ein vereinfachtes Blockschaltbild zur Erläuterung eines möglichen Einsatzes der in Fig. 1 und Fig. 2 gezeigten getakteten Sperrwandlerschaltungen in einem elektronischen Vorschaltgerät, und
Fig. 4 zeigt eine schematische Darstellung einer getakteten Sperrwandlerschaltung gemäß einer weiteren Ausführungsform der Erfindung.

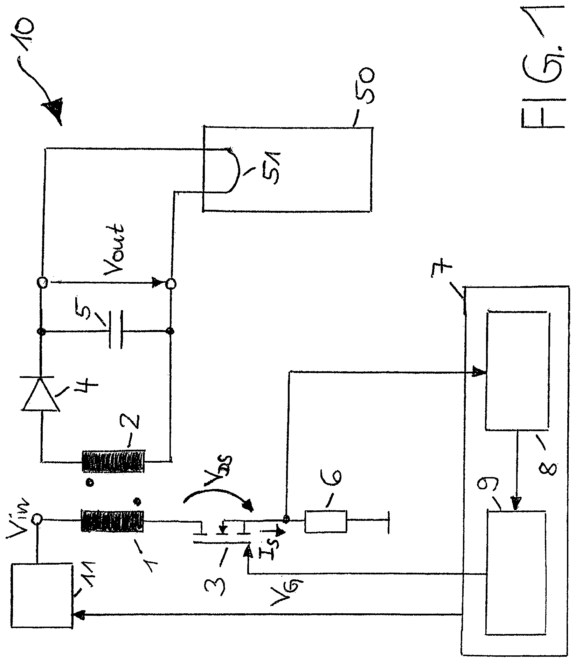

In Fig. 1 ist eine Heizschaltung 10 zum Vorheizen oder Zuheizen einer Wendel 51 eines Leuchtmittels 50, wie beispielsweise einer Gasentladungslampe, mit einer bevorzugten Ausführungsform einer getakteten Sperrwandlerschaltung gemäß der vorliegenden Erfindung dargestellt.

Die in Fig. 1 gezeigte getaktete Sperrwandlerschaltung umfasst einen Transformator mit einer Primärwicklung oder Primärspule 1 und einer Sekundärwicklung oder Sekundärspule 2, wobei der Transformator zur Übertragung von elektrischer Energie von einer mit einer Eingangsspannung Vin versorgten Primärseite, welche mit der Primärwicklung 1 verbunden ist, zu einer mit der Sekundärwicklung 2 verbundenen Sekundärseite dient, um an Ausgangsanschlüssen eine Ausgangsspannung Vout für das Beheizen der Heizwendel 51 zur Verfügung zu stellen. Die Primärseite weist einen mit der Primärwicklung 1 in Serie geschalteten steuerbaren Leistungsschalter 3 auf, welcher durch einen MOS-Feldeffekttransistor (MOSFET) realisiert ist. Grundsätzlich sind jedoch auch andere Ausgestaltungen des Schalters 3 denkbar, wie beispielsweise Bipolartransistoren oder BJT-Transistoren. Die Sekundärwicklung 2 des Transformators ist in Serie mit einer Diode 4 geschaltet, welche wiederum mit einem Speicherkondensator 5 gekoppelt ist, der parallel zu den Ausgangsanschlüssen des Sperrwandlers angeordnet ist und die Ausgangsspannung Vout bereitstellt.

Bei dem dargestellten Ausführungsbeispiel ist lediglich eine Sekundärwicklung 2 zum Heizen einer Wendel 51 vorgesehen. Mit der Primärwicklung 1 können jedoch auch zwei oder mehr Sekundärwicklungen mit entsprechenden sekundären Heizkreisen vorgesehen sein, wobei jeder dieser sekundären Heizkreise ähnlich zu dem in Fig. 1 gezeigten sekundären Heizkreis ausgestaltet und mit einer entsprechenden Wendel verbunden sein kann, so dass die in Fig. 1 gezeigte Heizschaltung ohne weiteres zum Heizen von zwei oder mehr Wendeln erweitert werden kann.

Die Eingangsspannung Vin für die in Fig. 1 gezeigte Sperrwandlerschaltung wird von einer Spannungsquelle 11 geliefert, wobei diese repräsentativ sowohl für eine als separate Komponente vorgesehene Spannungsquelle als auch für einen Schaltungsabschnitt, aus dem die Spannung Vin abgeleitet ist, ist.

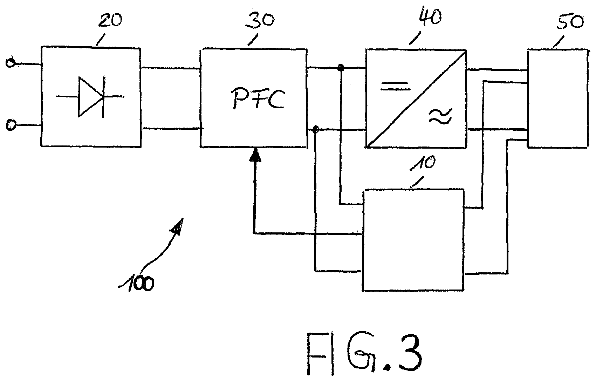

Fig. 3 zeigt beispielhaft die Anbindung einer derartigen Heizschaltung 10 an ein elektronisches Vorschaltgerät 100. Das elektronische Vorschaltgerät 100 umfasst eine Gleichrichterschaltung 20, welche eine eingangsseitige Versorgungsspannung, beispielsweise Netzspannung, gleichrichtet. Die von der Gleichrichterschaltung 20 zur Verfügung gestellte Spannung wird in einer Leistungsfaktorkorrekturschaltung ("Power Factor Correction") 30 einer Oberwellenfilterung unterzogen und somit geglättet. Mit der Leistungsfaktorkorrekturschaltung 30 ist eine Wechselrichterschaltung 40 gekoppelt, welche die Zwischenkreisspannung oder Busspannung der Leistungsfaktorkorrekturschaltung 30 in eine für den Betrieb des Leuchtmittels 50 geeignete Ausgangswechselspannung umsetzt. Die Heizschaltung 10 kann ebenfalls mit der Leistungsfaktorkorrekturschaltung 30 gekoppelt sein, so dass die in Fig. 1 gezeigte Eingangsspannung Vin der Zwischenkreisspannung oder Busspannung entspricht. In diesem Fall ist die in Fig. 1 gezeigte Spannungsquelle 11 repräsentativ für die in Fig. 3 gezeigte Leistungsfaktorkorrekturschaltung 30.

Der steuerbare Schalter 3, welcher gemäß Fig. 1 zwischen die Primärwicklung 1 und einen mit Masse verbundenen Shunt-Widerstand 6 geschaltet ist, wird von einer Steuereinheit 7 angesteuert, welche diesen im Normalbetrieb durch entsprechende Einstellung der Gate-Spannung V_{G} des als MOSFET ausgestalteten Schalters 3 zur Taktung des Sperrwandlers selektiv mit einer bestimmten Frequenz und Einschaltdauer einschaltet und wieder ausschaltet. Ist der Schalter 3 eingeschaltet, fließt über die Primärwicklung 1 und den Schalter 3 ein linear ansteigender Strom I_{S}, so dass elektrische Energie in der Primärwicklung 1 gespeichert wird. Beim Öffnen des Schalters 3 wird in der Sekundärwicklung 2 eine dieser in der Primärwicklung 1 gespeicherten Energie entsprechende Spannung induziert, welche von der Diode 4 gleichgerichtet und von dem Kondensator 5 gefiltert wird, so dass schließlich die an dem Kondensator 5 auftretende Spannung als Ausgangsspannung Vout des Sperrwandlers bereitgestellt wird.

Die am Schalter 3 auftretende Spannung, welche im vorliegenden Beispiel der Drain-Source-Spannung V_{DS} des als MOSFET ausgebildeten Schalters 3 entspricht, ist im eingeschalteten Zustand des Schalters 3 Null und steigt bei Ausschalten bzw. Öffnen des Schalters 3 an.

Wie zuvor beschrieben worden ist, kann es bei bestimmten Betriebsbedingungen - insbesondere als Resultat des so genannten "Avalanche"-Effekts - nach dem Ausschalten des Schalters 3 zu Überschwinger in der Spannung V_{DS} kommen, welche zu einer Beschädigung oder sogar Zerstörung der Komponenten, insbesondere des Schalters 3, führen können. Nach einem Einschalten des Schalters 3 steigt der Strom IS durch den Schalter 3 linear an und der Transformator wird aufmagnetisiert.

Wird der Schalter 3 ausgeschaltet, d.h. geöffnet, fällt der Strom wieder auf Null ab. Nachdem der Schalter 3 geöffnet wurde, kann kein direkter Strom mehr durch den Schalter 3 fließen. Aufgrund der Magnetisierung des Transformators fließt dann sekundärseitig über die Sekundärwicklung 2 ein Strom, bis zu dem Zeitpunkt der Entmagnetisierung des Transformators. An der Primärwicklung 1 kann es durch das Öffnen des Schalters 3 zu hohen Spannungen kommen, da der Strom durch die Primärwicklung 1 abrupt unterbrochen wird. Zusätzlich kann von der Sekundärwicklung 2 eine Spannung rückgekoppelt werden. Aufgrund der parasitären Kapazitäten des Schalters 3 beispielsweise MOSFET 3 kann diese Spannungsüberhöhung, die nach dem Öffnen des Schalters 3 über dem Schalter 3 auftreten kann, auch am Shunt-Widerstand 6 erfasst werden (da auch in der Ausschaltphase ein Stromverlauf IS durch den Shunt-Widerstand 6 fließt).Aus diesem Grund ist eine Überwachung der Spannung V_{DS} (der Spannung über dem Schalter 3) nach dem Ausschalten des Schalters 3 vorgesehen, um durch Vergleich mit einem vorgebbaren Referenzwert einen derartigen Überspannungszustand erkennen zu können.

Bei dem in Fig. 1 gezeigten Ausführungsbeispiel erfolgt die Überwachung der Spannung V_{DS} indirekt durch Erfassung des durch den Schalter 3 und den Shunt-Widerstand 6 fließenden Stroms I_{S}. Von einer Auswertungseinrichtung 8 wird im ausgeschalteten Zustand des Schalters 3 der Strom I_{S} ausgewertet und in einen entsprechenden Wert für die Spannung VDS umgesetzt, welcher schließlich mit dem Referenzwert verglichen wird. Der Shunt-Widerstand 6 bzw. die dort auftretenden Strom- und Spannungswerte können zudem für andere Zwecke ausgewertet werden, beispielsweise zur Überstromerkennung oder zur Erkennung der an die Sekundärseite angeschlossenen Wendel 51.

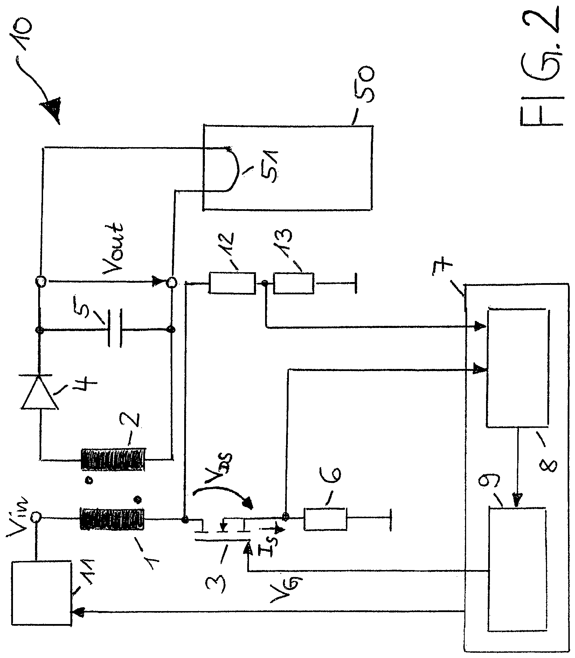

In Fig. 2 ist eine weitere Ausführungsform der Erfindung dargestellt, wobei gemäß Fig. 2 eine direkte Erfassung der Spannung V_{DS} mit Hilfe eines parallel zu dem Schalter 3 angeordneten Spannungsteilers erfolgt, welcher Widerstände 12 und 13 umfasst. Die an dem Verbindungspunkt zwischen den Widerständen 12 und 13 auftretende Spannung wird von der Auswertungseinrichtung 8 ausgewertet und mit dem Referenzwert verglichen. Bei Verwendung eines im Normalbetrieb für Spannungen im Bereich von 1000V ausgelegten Schalters 3 kann der Referenzwert beispielsweise im Bereich von 1200V liegen. Die in Fig. 2 gezeigte direkte Erfassung der Spannung V_{DS} durch den Spannungsteiler kann zusätzlich oder alternativ zu der indirekten Erfassung mit Hilfe des Shunt-Widerstands 6 vorgesehen sein.

Wird ein Überschreiten des Referenzwerts für V_{DS} nach einem Ausschaltvorgang des Schalters 3 und in einer Phase, in welcher sich der Schalter 3 noch im ausgeschalteten Zustand befindet, festgestellt, wird in einen Fehlerbetriebsmodus gewechselt, in dem verschiedene Maßnahmen ergriffen werden können, um diesem Überspannungszustand entgegen zu wirken.

So kann beispielsweise die Auswertungseinrichtung 8 eine zum selektiven Einschalten und Ausschalten des Schalters 3 verantwortliche Treibereinrichtung 9 der Steuereinheit 7 derart ansteuern, dass diese ein erneutes Einschalten des Schalters 3 zumindest vorübergehend unterlässt oder die Sperrwandlerschaltung bzw. die Heizschaltung 10 vollständig deaktiviert. Alternativ kann die Auswertungseinrichtung 8 die Treibereinrichtung 9 auch derart ansteuern, dass der Schalter 3 lediglich mit einer gegenüber dem Normalbetrieb reduzierten Einschaltzeit eingeschaltet wird.

Gemäß einem weiteren Ausführungsbeispiel der Erfindung ist es auch möglich, dass die Steuereinheit 7 bzw. die Auswertungseinrichtung 8 die Spannungsquelle 11, welche die Eingangsspannung Vin zur Verfügung stellt, wie in Fig. 1 angedeutet ansteuert, um im Fehlerbetrieb eine Reduktion der Eingangsspannung Vin gegenüber dem Normalbetrieb herbeizuführen. Wird die Heizschaltung 10 wie in Fig. 3 gezeigt in einem elektronischen Vorschaltgerät 100 verwendet, kann dies beispielsweise durch entsprechende Ansteuerung der als Spannungsquelle für die Heizschaltung 10 dienenden Leistungsfaktorkorrekturschaltung 30 erfolgen. Als Leistungsfaktorkorrekturschaltungen 30 werden häufig getaktete Strom- oder Spannungswandlerschaltungen eingesetzt, so dass die Reduktion der Ausgangsspannung der Leistungsfaktorkorrekturschaltung beispielsweise durch entsprechende Ansteuerung eines zur Taktung vorgesehen steuerbaren Schalters der Leistungsfaktorkorrekturschaltung erfolgen kann.

Gemäß einem weiteren Ausführungsbeispiel der Erfindung ist es auch möglich, dass die getaktete Sperrwandlerschaltung zur direkten oder indirekten Speisung einer Leuchtdiode (LED) genutzt wird. Beispielsweise können an der Sekundärseite des Transformators eine oder mehrere Leuchtdioden angeschlossen sein. Es wäre aber auch möglich, dass die getaktete Sperrwandlerschaltung einen nachgeschalteten Gleichspannungswandler, beispielsweise eine getaktete Konstantstromquelle, speist, und dieser nachgeschaltete Gleichspannungswandler dient zur Versorgung von einer oder mehrerer Leuchtdioden. Ein derartiger Gleichspannungswandler kann beispielsweise ein Tiefsetzsteller oder eine resonante Halbbrückenschaltung, vorzugsweise mit Stromregelung, sein.

Es kann auch möglich sein, dass die über dem Shunt-Widerstand 6 abfallende Spannung von der Überwachungseinrichtung 8 der Steuereinheit 7 überwacht wird und die Überwachungseinrichtung 8 insbesondere erfasst, wann ein Nulldurchgang des Strom I_{S} aufgrund der Entmagnetisierung der Transformators nach einem Ausschalten des Schalters 3 auftritt. Nur bei Feststellen eines derartigen Nulldurchgangs wird von der Überwachungseinrichtung 8 ein Steuersignal für eine Treibereinrichtung 9 erzeugt, um diese zu veranlassen, die Gate-Spannung V_{G} des Schalters 3 zum erneuten Einschalten des Schalters 3 entsprechend einzustellen. Diese Art der Ansteuerung kann genutzt werden, um ein möglichst störungsfreies und verlustfreies Schalten des Schalters 3 und zudem unabhängig von der Wickelkapazität, welche über einen weiten Bereich variieren kann, einen möglichst nicht variierenden Ausgangsstrom bereitzustellen.

Auf diese Weise kann nach dem Ausschalten des Schalters 3 als Triggerereignis für das nächste Einschalten des Schalters ein Nulldurchgang des Stroms I_{S} erfasst werden. Ebenso ist jedoch auch möglich, dass der Schalter 3 bei Erreichen eines anderen vordefinierten Stromwerts eingeschaltet wird, solange gewährleistet ist, dass der Schalter 3 immer nur bei diesem einen definierten Stromwert eingeschaltet wird.

Bei den gezeigten Ausführungsbeispielen erfolgt die Überwachung des Schalterstroms I_{S} mit Hilfe des Shunt-Widerstands 6, wobei die an dem Shunt-Widerstand 6 auftretende Spannung in der Überwachungseinrichtung 8 ausgewertet wird. Der Shunt-Widerstand 6 bzw. die dort auftretenden Strom- und Spannungswerte können zudem für andere Zwecke ausgewertet werden, beispielsweise zur Überstromerkennung oder zur Erkennung der an die Sekundärseite angeschlossenen Last, d.h. bei dem dargestellten Beispiel der Heizschaltung 10 zur Erkennung der jeweils angeschlossenen zu beheizenden Wendel 51 oder auch im Falle einer Leuchtdiode als Last einer Typerkennung beispielsweise der Farbe oder der Leistung der Leuchtdiode.

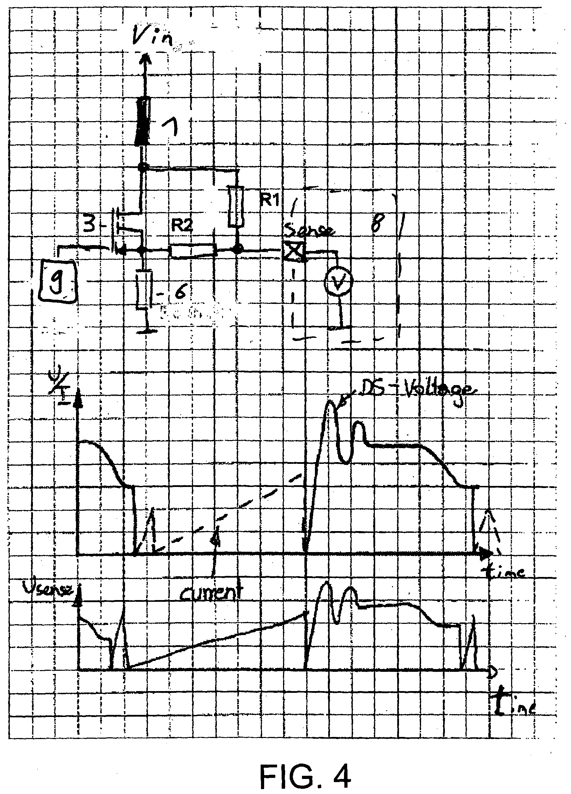

In Fig. 4 ist eine schematische Darstellung einer getakteten Sperrwandlerschaltung gemäß einer weiteren Ausführungsform der Erfindung dargestellt. Die in Fig. 4 gezeigte getaktete Sperrwandlerschaltung umfasst einen Transformator mit einer Primärwicklung oder Primärspule 1 und einer hier nicht dargestellten Sekundärwicklung oder Sekundärspule 2. Der Transformator dient zur Übertragung von elektrischer Energie von einer mit einer Eingangsspannung Vin versorgten Primärseite, welche mit der Primärwicklung 1 verbunden ist, zu einer mit der Sekundärwicklung 2 verbundenen Sekundärseite, um an Ausgangsanschlüssen eine Ausgangsspannung Vout beispielsweise für das Beheizen einer Heizwendel oder auch zur Speisung einer Leuchtdiode zur Verfügung zu stellen.

Die Primärseite weist einen mit der Primärwicklung 1 in Serie geschalteten steuerbaren Leistungsschalter 3 auf, welcher hier durch einen MOS-Feldeffekttransistor (MOSFET) realisiert ist. Grundsätzlich sind jedoch auch andere Ausgestaltungen des Schalters 3 denkbar, wie beispielsweise Bipolartransistoren oder BJT-Transistoren. Der steuerbare Schalter 3 wird von einer Steuereinheit 7 angesteuert, welche diesen im Normalbetrieb durch entsprechende Einstellung der Gate-Spannung V_{G} des als MOSFET ausgestalteten Schalters 3 zur Taktung des Sperrwandlers selektiv mit einer bestimmten Frequenz und Einschaltdauer einschaltet und wieder ausschaltet. In Serie mit dem steuerbaren Schalter 3 ist auch gemäß Fig. 4 ein mit Masse verbundener Shunt-Widerstand 6 geschaltet. Weiterhin ist zur Messung der Spannung über dem Schalter 3 auftretenden Spannung, welche im vorliegenden Beispiel der Drain-Source-Spannung V_{DS} des als MOSFET ausgebildeten Schalters 3 entspricht, ein Widerstand R1 angeordnet. Dieser Widerstand R1 ist mit einem Anschuß mit dem Anschlußpunkt des Schalters 3 an die Primärwicklung 1 verbunden. Der andere Anschluß des Widerstands R1 ist mit einem Messeingang der Steuereinheit 7 bzw. der Auswertungseinrichtung 8 verbunden sowie mit einem weiteren Widerstand R2. Der weitere Widerstand R2 ist zum einen mit einem Anschluß des Widerstands R1 verbunden und zum anderen mit dem Verbindungspunkt von Shunt-Widerstand 6 und Schalter 3. Die beiden Widerstände R1 und R2 sind im Vergleich zum Shunt-Widerstand 6 relativ hochohmig ausgelegt. In diesem Beispiel erfolgt somit eine direkte Erfassung der Spannung VDS über dem Schalter 3.

Ist der Schalter 3 eingeschaltet, fließt über die Primärwicklung 1 und den Schalter 3 ein linear ansteigender Strom I_{S}, so dass elektrische Energie in der Primärwicklung 1 gespeichert wird (sie wird aufmagnetisiert). Dieser Stromfluß kann durch Shunt-Widerstand 6 erfasst werden. Der parallel angeordnete Widerstand R1 wird in dieser Phase durch den sehr niederohmigen Schalter 3 überbrückt, solange der Schalter 3 eingeschaltet ist. Beim Öffnen des Schalters 3 wird dieser sehr hochohmig, nun kann über den Widerstandsteiler R1, R2 und 6 die über dem Schalter 3 abfallende Spannung mittels des Messeingangs Sense durch die Auswertungseinrichtung 8 erfasst werden.

In Fig. 4 unten ist der Verlauf der am Messeingang Sense erfassten Spannung dargestellt. Bei dem Beispiel gemäß Fig. 4 werden die Widerstände R1 und R2 als ohmscher Spannungsteiler genutzt, während bei dem Beispiel der Fig. 1 die parasitären Kapazitäten des ausgeschalteten Schalters 3 genutzt werden, um auf die Spannung über dem Schalter 3 zu schließen. Im Unterschied zum Beispiel der Fig. 2 ermöglicht das Beispiel der Fig. 4 eine Reduktion der bei der Auswertungseinrichtung 8 erforderlichen Eingänge.

Die Erfindung kann sich auch auf eine nicht potentialgetrennte Sperrwandlerschaltung beziehen. In diesem Fall ist anstelle des Transformators nur eine Spule als Induktivität vorhanden, die sowohl die Funktion der Primärwicklung als auch der Sekundärwicklung des Transformators übernimmt. In diesem Fall liegt eine getaktete Sperrwandlerschaltung vor, welche eine Induktivität aufweist, wobei die getaktete Sperrwandlerschaltung derart ausgestaltet ist, dass sie in einem Normalbetrieb elektrische Energie durch wiederholtes Einschalten und Ausschalten von einem mit der Induktivität verbundenen Schalter 3 überträgt, und eine Steuereinheit 7 zum Ansteuern des Schalters 3 der getakteten Sperrwandlerschaltung. Durch das durch wiederholte Einschalten und Ausschalten des Schalters 3 wird die Induktivität auf- und entmagnetisiert und somit elektrische Energie übertragen. Dabei ist eine Erfassungseinrichtung 6; 10, 11 zum direkten oder indirekten Erfassen einer Spannung an dem Schalter 3 nach einem Ausschalten des Schalters 3 vorhanden. Weiterhin ist eine Auswertungseinrichtung 8 vorhanden, zum Vergleichen der von der Erfassungseinrichtung 6 nach dem Ausschalten des Schalters 3 erfassten Spannung an dem Schalter 3 mit einem Referenzwert, um einen Wechsel von dem Normalbetrieb in einen Fehlerbetrieb zu veranlassen, falls die Spannung an dem Schalter 3 den Referenzwert übersteigt.

Wie in Fig. 1 und Fig. 2 angedeutet ist, kann die Auswertungseinrichtung 8 als Bestandteil der Steuereinheit 7 vorgesehen sein, wobei die Steuereinheit 7 vorzugsweise in Form einer integrierten Schaltung, insbesondere als ASIC ("Application Specific Integrated Circuit") ausgestaltet ist. Ebenso ist es jedoch auch möglich, dass es sich bei der Auswertungseinrichtung 8 um eine von der Steuereinheit 7 separate Komponente handelt.

## Patentansprüche

1. Verfahren zum Schalten einer getakteten Sperrwandlerschaltung,
wobei die Sperrwandlerschaltung einen Transformator mit einer Primärwicklung (1) und einer Sekundärwicklung (2) umfasst, und wobei in einem Normalbetrieb elektrische Energie von einer mit der Primärwicklung (1) verbundenen und mit einem Schalter (3) durch wiederholtes Einschalten und Ausschalten des Schalters (3) getakteten Primärseite zu einer mit der Sekundärwicklung (2) verbundenen Sekundärseite übertragen wird,
aufweisend die Schritte:
Erfassen einer Spannung (V_{DS}) an dem Schalter (3),
Vergleichen der Spannung (V_{DS}) an dem Schalter (3) mit einem Referenzwert, und Wechseln von dem Normalbetrieb in einen Fehlerbetrieb, falls die Spannung (V_{DS}) an dem Schalter (3) den Referenzwert übersteigt,
**dadurch gekennzeichnet, dass**
das Erfassen der Spannung (V_{DS}) an dem Schalter (3) nach dem Ausschalten des Schalters (3) erfolgt,
wobei die Spannung (V_{DS}) an dem Schalter (3) durch Erfassen eines Stroms (I_{S}) durch einen zwischen dem Schalter (3) und Masse geschalteten Widerstand (6) erfasst wird, und wobei der Strom (I_{S}) durch den Widerstand (6) zudem zur Erkennung einer an die Sekundärseite angeschlossenen Last (51) oder zur Überstromerkennung ausgewertet wird.

2. Verfahren nach Anspruch 1 ,
**dadurch gekennzeichnet,**
**dass** in dem Fehlerbetrieb ein Einschalten des Schalters (3) zumindest vorübergehend unterbunden oder gegenüber dem Normalbetrieb eine Einschaltzeit des Schalters (3) reduziert wird.

3. Verfahren nach Anspruch 1 oder 2,
**dadurch gekennzeichnet,**
**dass** in dem Fehlerbetrieb eine an der Primärseite der getakteten Sperrwandlerschaltung anliegende Versorgungsspannung (Vin) gegenüber dem Normalbetrieb reduziert wird.

4. Verfahren nach Anspruch 3,
**dadurch gekennzeichnet,**
**dass** die Versorgungsspannung (Vin) von einer mit der getakteten Sperrwandlerschaltung gekoppelten Leistungsfaktorkorrekturschaltung (30) zur Verfügung gestellt wird, wobei in dem Fehlerbetrieb die Leistungsfaktorkorrekturschaltung (30) zur Reduktion der Versorgungsspannung (Vin) gegenüber dem Normalbetrieb angesteuert wird

5. Getaktete Sperrwandlerschaltung, umfassend
einen Transformator mit einer Primärwicklung (1) und einer Sekundärwicklung (2), wobei die getaktete Sperrwandlerschaltung derart ausgestaltet ist, dass sie in einem Normalbetrieb elektrische Energie von einer mit der Primärwicklung (1) verbundenen und mit einem Schalter (3) durch wiederholtes Einschalten und Ausschalten des Schalters (3) getakteten Primärseite zu einer mit der Sekundärwicklung (2) verbundenen Sekundärseite überträgt,
eine Steuereinheit (7) zum Ansteuern des Schalters (3) der getakteten Sperrwandlerschaltung,
eine Erfassungseinrichtung (6; 10, 11) zum Erfassen einer Spannung (V_{DS}) an dem Schalter (3), und
eine Auswertungseinrichtung (8) zum Vergleichen der von der Erfassungseinrichtung (6; 10, 11) erfassten Spannung (V_{DS}) an dem Schalter (3) mit einem Referenzwert, um einen Wechsel von dem Normalbetrieb in einen Fehlerbetrieb zu veranlassen, falls die Spannung (V_{DS}) an dem Schalter (3) den Referenzwert übersteigt,
**dadurch gekennzeichnet, dass**
die Erfassungseinrichtung (6; 10, 11) derart eingerichtet ist, dass sie die Spannung (V_{DS}) an dem Schalter (3) nach dem Ausschalten des Schalters (3) erfasst, wobei die Erfassungseinrichtung einen zwischen dem Schalter (3) und Masse geschalteten Widerstand (6) zum Erfassen eines Stroms (I_{S}) durch den Schalter als eine die Spannung (V_{DS}) an dem Schalter (3) repräsentierende Größe umfasst,
wobei die Auswertungseinrichtung (8) den Strom (I_{S}) durch den Widerstand (6) zudem zur Erkennung einer an die Sekundärseite angeschlossenen Last (51) oder zur Überstromerkennung auswertet.

6. Getaktete Sperrwandlerschaltung nach Anspruch5,
**dadurch gekennzeichnet,**
**dass** in dem Fehlerbetrieb die Auswertungseinrichtung (8) ein Einschalten des Schalters (3) durch die Steuereinheit (7) zumindest vorübergehend unterbindet oder gegenüber dem Normalbetrieb eine Reduktion der Einschaltzeit des Schalters (3) veranlasst.

7. Getaktete Sperrwandlerschaltung nach Anspruch 5 oder 6,
**dadurch gekennzeichnet,**
**dass** die Auswertungseinrichtung (8) derart ausgestaltet ist, dass sie in dem Fehlerbetrieb eine Versorgungsspannungsquelle (11; 30), welche eine an der Primärseite der getakteten Sperrwandlerschaltung anliegende Versorgungsspannung (Vin) zur Verfügung stellt, zur Reduktion der Versorgungsspannung (Vin) gegenüber dem Normalbetrieb ansteuert.

8. Getaktete Sperrwandlerschaltung nach einem der Ansprüche 5-7,
**dadurch gekennzeichnet,**
**dass** die Auswertungseinrichtung (8) Bestandteil der in Form einer integrierten Schaltung ausgebildeten Steuereinheit (7) ist.

9. Getaktete Sperrwandlerschaltung nach einem der Ansprüche 5-8,
**dadurch gekennzeichnet,**
**dass** der Schalter (3) ein MOS-Feldeffekttransistor ist, wobei die von der Erfassungseinrichtung (6; 10, 11) erfasste Spannung (V_{DS}) eine Drain-Source-Spannung des MOS-Feldeffekttransistors ist.

10. Getaktete Sperrwandlerschaltung nach einem der Ansprüche 5-9,
**dadurch gekennzeichnet,**
**dass** die Erfassungseinrichtung eine mit dem Schalter (3) gekoppelte Spannungsteilerschaltung (12, 13), welche insbesondere parallel zu dem Schalter (3) angeordnet ist, zur Erfassung der Spannung an dem Schalter (3) umfasst.

11. Getaktete Sperrwandlerschaltung nach einem der Ansprüche 5-10,
**dadurch gekennzeichnet,**
**dass** die getaktete Sperrwandlerschaltung als Heizschaltung (10) zum Heizen mindestens einer Wendel (51) einer Gasentladungslampe oder einer Leuchtstofflampe (50) ausgestaltet ist.

12. Betriebsgerät oder elektronisches Vorschaltgerät (100) für ein Leuchtmittel (50) mit einer getakteten Sperrwandlerschaltung nach einem der Ansprüche 5-11.

## Claims

1. A method for toggling a clocked flyback converter circuit, wherein the flyback converter circuit comprises a transformer with a primary winding (1) and a secondary winding (2), and wherein in a normal operation electrical energy is transferred from a primary side, which is connected to the primary winding (1) and clocked with a switch (3) by repeatedly activating and deactivating the switch (3), to a secondary side connected to the secondary winding (2),
having the steps:
Detection of a voltage (V_{DS}) on the switch (3),
comparing the voltage (V_{DS}) on the switch (3) with a reference value, and
switching from the normal operation into an error mode, if the voltage (V_{DS}) on the switch (3) exceeds the reference value,
**characterized in that**
the detection of the voltage (V_{DS}) on the switch (3) takes place after the deactivation of the switch (3),
wherein the voltage (V_{DS}) on the switch is detected by detecting a current (I_{S}) through a resistor (6) connected between the switch (3) and ground, and wherein the current (I_{S}) through the resistor (6) is also evaluated to detect a load (51) connected to the secondary side or to detect excess current.

2. A method according to Claim 1,
**characterized in**
**that** in the error mode the activation of the switch (3) is at least temporarily prevented or an activation time of the switch (3) is reduced compared to the normal operation.

3. A method according to Claim 1 or 2,
**characterized in**
**that** in the error mode a supply voltage (Vin) applied to the primary side of the clocked flyback converter circuit is reduced compared to the normal operation.

4. A method according to Claim 3,
**characterized in**
**that** supply voltage (Vin) is provided by a power factor correction circuit (30) coupled with the clocked flyback converter circuit, wherein in the error mode the power factor correction circuit (30) is controlled to reduce the supply voltage (Vin) compared to the normal operation.

5. A clocked flyback converter circuit, comprising a transformer with a primary winding (1) and a secondary winding (2), wherein the clocked flyback converter circuit is designed in such a manner that in a normal operation it transfers electrical energy from a primary side, which is connected to the primary winding (1) and clocked with the switch (3) by repeatedly activating and deactivating the switch (3), to a secondary side connected to the secondary winding (2),
a control unit (7) for controlling the switch (3) of the clocked flyback converter circuit,
a detection device (6; 10, 11) for detecting a voltage (V_{DS}) on the switch (3), and
an evaluation device (8) for comparing the voltage (V_{DS}) on the switch (3) detected by the detection device (6; 10, 11) with a reference value, in order to cause a switch from the normal operation into an error mode, if the voltage (V_{DS}) on the switch (3) exceeds the reference value,
**characterized in that**
a detection device (6; 10, 11) is set up in such a manner that it detects the voltage (V_{DS}) on the switch (3) after the deactivation of the switch (3), wherein the detection device comprises a resistor (6) connected between the switch (3) and ground for detecting a current (Is) through the switch as a magnitude representing the voltage (V_{DS}) on the switch (3),
wherein the evaluation device (8) in addition evaluates the current (Is) through the resistor (6) to detect a load (51) connected to the secondary side or to detect excess current.

6. A clocked flyback converter circuit according to Claim 5,
**characterized in**
**that** in the error mode the evaluation device (8) at least temporarily prevents an activation of the switch (3) by the control unit (7) or causes a reduction of the activation time of the switch (3) compared to the normal operation.

7. A clocked flyback converter circuit according to Claim 5 or 6,
**characterized in**
**that** the evaluation device (8) is designed in such a manner that in the error mode it controls a supply voltage source (11; 30), which provides a supply voltage (Vin) applied to the primary side of the clocked flyback converter circuit, in order to reduce the supply voltage (Vin) compared to the normal operation.

8. A clocked flyback converter circuit according to any one of Claims 5-7,
**characterized in**
**that** the evaluation device (8) is a component of the control unit (7) designed in the form of an integrated circuit.

9. A clocked flyback converter circuit according to any one of Claims 5-8,
**characterized in**
**that** the switch (3) is a MOS field-effect transistor, wherein the voltage (V_{DS}) detected by the detection device (6; 10, 11) is a drain-source voltage of the MOS field-effect transistor.

10. A clocked flyback converter circuit according to any one of Claims 5-9,
**characterized in**
**that** the detection device comprises a voltage divider circuit (12, 13) coupled with the switch (3), which is arranged in particular parallel to the switch (3), for detecting the voltage on the switch (3).

11. A clocked flyback converter circuit according to any one of Claims 5-10,
**characterized in**
**that** the clocked flyback converter circuit is designed as a heating circuit (10) for heating at least one filament (51) of a gas-discharge lamp or of a fluorescent lamp (50).

12. An operating device or electronic ballast (100) for an illuminant (50) with a clocked flyback converter circuit according to any one of Claims 5-11.

## Revendications

1. Procédé de commutation d'un circuit convertisseur à transfert indirect cadencé, le circuit convertisseur à transfert indirect comprenant un transformateur doté d'un enroulement primaire (1) et d'un enroulement secondaire (2), et de l'énergie électrique étant, en mode normal, transmise à partir d'un côté primaire connecté à l'enroulement primaire (1), et cadencé avec un commutateur (3) par mise en circuit et mise hors circuit répétées du commutateur (3), vers un côté secondaire connecté à l'enroulement secondaire (2),
comportant les étapes suivantes :
détection d'une tension (V_{DS}) sur le commutateur (3),
comparaison de la tension (V_{DS}) sur le commutateur (3) avec une valeur de référence, et
passage du mode normal à un mode d'erreur si la tension (V_{DS}) sur le commutateur (3) dépasse la valeur de référence,
**caractérisé en ce que**
la détection de la tension (V_{DS}) sur le commutateur (3) s'effectue après la mise hors circuit du commutateur (3),
la tension (V_{DS}) sur le commutateur (3) étant détectée par la détection d'un courant (I_{S}) traversant une résistance (6) montée entre le commutateur (3) et la masse, et
le courant (I_{S}) traversant la résistance (6) étant analysé en outre pour la détection d'une charge (51) connectée au côté secondaire ou pour la détection de surintensité.

2. Procédé selon la revendication 1,
**caractérisé en ce que**,
dans le mode d'erreur, une mise en circuit du commutateur (3) est interdite au moins provisoirement, ou bien un temps de mise en circuit du commutateur (3) est réduit par rapport au mode normal.

3. Procédé selon la revendication 1 ou 2,
**caractérisé en ce que**,
dans le mode d'erreur, une tension d'alimentation (Vin) présente sur le côté primaire du circuit convertisseur à transfert indirect cadencé est réduite par rapport au mode normal.

4. Procédé selon la revendication 3,
**caractérisé en ce que**
la tension d'alimentation (Vin) est mise à disposition par un circuit de correction du facteur de puissance (30) couplé au circuit convertisseur à transfert indirect cadencé, le circuit de correction du facteur de puissance (30) étant, dans le mode d'erreur, piloté en vue de la réduction de la tension d'alimentation (Vin) par rapport au mode normal.

5. Circuit convertisseur à transfert indirect cadencé, comprenant
un transformateur doté d'un enroulement primaire (1) et d'un enroulement secondaire (2), le circuit convertisseur à transfert indirect cadencé étant constitué de telle sorte que, dans un mode normal, il transmet de l'énergie électrique à partir d'un côté primaire connecté à l'enroulement primaire (1), et cadencé avec un commutateur (3) par mise en circuit et mise hors circuit répétées du commutateur (3), vers un côté secondaire connecté à l'enroulement secondaire (2),
une unité de commande (7) destinée au pilotage du commutateur (3) du circuit convertisseur à transfert indirect cadencé,
un dispositif de détection (6 ; 10, 11) destiné à la détection d'une tension (V_{DS}) sur le commutateur (3), et
un dispositif d'analyse (8) destiné à la comparaison de la tension (V_{DS}) sur le commutateur (3) détectée par le dispositif de détection (6 ; 10, 11) avec une valeur de référence pour provoquer un passage du mode normal vers un mode d'erreur si la tension (V_{DS}) sur le commutateur (3) dépasse la valeur de référence,
**caractérisé en ce que**
le dispositif de détection (6 ; 10, 11) est agencé de telle sorte qu'il détecte la tension (V_{DS}) sur le commutateur (3) après la mise hors circuit du commutateur (3), le dispositif de détection comprenant une résistance (6) montée entre le commutateur (3) et la masse pour la détection d'un courant (I_{S}) traversant le commutateur en tant que grandeur représentant la tension (V_{DS}) sur le commutateur (3),
le dispositif d'analyse (8) analysant le courant (Is) traversant la résistance (6) en outre pour la détection d'une charge (51) connectée au côté secondaire ou pour la détection de surintensité.

6. Circuit convertisseur à transfert indirect cadencé selon la revendication 5,
**caractérisé en ce que**,
dans le mode d'erreur, le dispositif d'analyse (8) interdit au moins provisoirement une mise en circuit du commutateur (3) par l'unité de commande (7) ou bien provoque une réduction du temps de mise en circuit du commutateur (3) par rapport au mode normal.

7. Circuit convertisseur à transfert indirect cadencé selon la revendication 5 ou 6,
**caractérisé en ce que**
le dispositif d'analyse (8) est constitué de telle sorte que, dans le mode d'erreur, pour la réduction de la tension d'alimentation (Vin) par rapport au mode normal, il pilote une source de tension d'alimentation (11 ; 30) qui met à disposition une tension d'alimentation (Vin) présente sur le côté primaire du circuit convertisseur à transfert indirect cadencé.

8. Circuit convertisseur à transfert indirect cadencé selon l'une des revendications 5 à 7,
**caractérisé en ce que**
le dispositif d'analyse (8) fait partie de l'unité de commande (7) constituée sous la forme d'un circuit intégré.

9. Circuit convertisseur à transfert indirect cadencé selon l'une des revendications 5 à 8,
**caractérisé en ce que**
le commutateur (3) est un transistor à effet de champ MOS, la tension (V_{DS}) détectée par le dispositif de détection (6 ; 10, 11) étant une tension drain-source du transistor à effet de champ MOS.

10. Circuit convertisseur à transfert indirect cadencé selon l'une des revendications 5 à 9,
**caractérisé en ce que**
le dispositif de détection comprend un circuit diviseur de tension (12, 13) couplé au commutateur (3), qui est en particulier disposé en parallèle avec le commutateur (3), pour la détection de la tension sur le commutateur (3).

11. Circuit convertisseur à transfert indirect cadencé selon l'une des revendications 5 à 10,
**caractérisé en ce que**
le circuit convertisseur à transfert indirect cadencé est constitué en tant que circuit de chauffage (10) destiné à chauffer au moins un filament (51) d'une lampe à décharge ou d'une lampe fluorescente (50).

12. Appareil de manoeuvre ou ballast électronique (100) pour un moyen d'éclairage (50) avec un circuit convertisseur à transfert indirect cadencé selon l'une des revendications 5 à 11.
